# EUROPÄISCHE PATENTSCHRIFT

(11) **EP 3 692 267 B1**
(45) Veröffentlichungstag und Bekanntmachung des Hinweises auf die Patenterteilung: **20.04.2022**
(21) Anmeldenummer: 18765096.5
(22) Anmeldetag: 03.09.2018
(51) Int. Cl.: F16B 5/00, F16B 12/20, F16B 12/26, F16B 13/12, F16B 21/08

(54) **VERBINDER ZUM STOSSVERBINDEN ZWEIER BAUTEILE**
CONNECTOR FOR BUTT CONNECTING TWO COMPONENTS
RACCORDEMENT SERVANT À RÉALISER UN ABOUTAGE DE DEUX PIÈCES

(30) Priorität: 05.10.2017 DE 202017106045 U
(43) Veröffentlichungstag der Anmeldung: 12.08.2020
(73) Patentinhaber: Häfele SE & Co KG, 72202 Nagold (DE)
(72) Erfinder: VON WILCKE, Michael, 16547 Birkenwerder (DE); LEISTERT, Peer, 15566 Schöneiche (DE); SAWATZKI, Gerd, 15518 Rauen (DE); NITSCHMANN, Gunter, 72285 Pfalzgrafenweiler (DE)
(74) Vertreter: Kohler Schmid Möbus Patentanwälte
(86) Internationale Anmeldenummer: PCT/EP2018/073602
(87) Internationale Veröffentlichungsnummer: WO 2019/068401

(56) Entgegenhaltungen:
- DE-U1- 20 007 389
- DE-U1-202014 002 242
- DE-U1-202016 102 176
- US-B1- 6 299 397

## Beschreibung

Die Erfindung betrifft einen Verbinder zum Stoßverbinden zweier Bauteile mit zwei bis in eine verriegelte Montagestellung ineinander zusammenschiebbaren Verbinderteilen in Form von U-förmigen Bügeln gemäß dem Oberbegriff von Anspruch 1 sowie auch eine Anordnung mit einem solchen Verbinder.

Ein derartiger Verbinder ist beispielsweise durch die DE 10 2016 102 176 U1 bekannt geworden.

Bevorzugt bestehen solche Verbinder aus federelastisch verformbarem Kunststoff, der vergleichsweise gute Gleiteigenschaften besitzt. Die Verbindung kann dabei zwischen Holzteilen erfolgen. Ein häufiger (aber nicht der einzige Fall) betrifft die Verbindung von zwei Spanplatten in einem T-Stoß, wobei die Spanplatten bis auf die weiche Stirnseiten eine harte Oberfläche aufweisen, so dass im T-Stoß eine weiche Stirnseite auf eine harte Oberfläche stößt. Die Verbindung wird dabei so hergestellt, dass in die zu verbindenden Spanplatten die notwendigen Löcher gebohrt, die beiden U-förmigen Bügel der DE 10 2016 102 176 U1 in einer Vormontagestellung in die Löcher eingesetzt und die zu verbindenden Spanplatten zusammengefahren werden, oft durch einen Schlag, so dass die U-förmigen Bügel in die Montagestellung zusammengeschoben werden und sich in dieser verriegeln, was die beiden Spanplatten gegeneinander fixiert. Die beiden Bügelarme definieren einen Außendurchmesser, der ausgehend vom mittleren Bügelarm auf den hinteren Steckabschnitten kontinuierlich bis zu einem Außenabsatz (Randabtastung) ansteigt, dessen Außendurchmesser größer als der Bohrungsdurchmesser ist. Beim Einfügen in das Loch der Spanplatte werden die konisch ausgebildeten, hinteren Steckabschnitte auf den Bohrungsdurchmesser zusammengedrückt, wodurch die Randabtastung innerhalb der Bohrung verschwindet.

Es hat sich allerdings gezeigt, dass die beim Zusammenfahren der beiden Spanplatten erforderlichen Fügekräfte sehr hoch sind und die zu verbindenden Bauteile nicht immer spaltfrei aneinander fixiert sind. Außerdem hat sich gezeigt, dass Spanplatten oft zu weich sind, um ein Zusammendrücken des Konus zu bewirken, vor allem stirnseitig. Dadurch blieb der Verbinder konisch, die Randabtastung verschwindet nicht und die Bohrung wird radial aufgedrückt. Dies bewirkt jedoch einen großen Kraftbedarf beim Zusammenfügen der Spanplatten, was sich negativ auf die praktische Anwendung auswirkt. In härteren Holzmaterialien (z.B. MDF) drückt sich der Konus teilweise zusammen. Es hat sich gezeigt, dass diese gewünschte Verformung des Verbinders jedoch ebenfalls einen großen Kraftbedarf benötigt.

Demgegenüber ist es daher die Aufgabe der vorliegenden Erfindung, bei einem Verbinder der eingangs genannten Art die Fügekräfte zu reduzieren und die Bauteile dennoch miteinander stets spaltfrei zu verbinden.

Diese Aufgabe wird erfindungsgemäß dadurch gelöst, dass die Außenseiten der hinteren Steckabschnitte jeweils als Teilmantelflächen des gleichen Kreiszylinders oder zumindest annähernd als Teilmantelflächen des gleichen Kreiszylinders ausgebildet sind. Die hinteren Steckabschnitte haben auf ihrer axialen Länge somit den gleichen bzw. annähernd den gleichen Durchmesser, wobei im letzteren Fall Konuswinkel von kleiner als 2° noch im Rahmen der Erfindung liegen. Vorzugsweise sind die beiden Verbinderteile baugleich ausgebildet.

Erfindungsgemäß wird somit auf einen Konus der hinteren Steckabschnitte verzichtet, sondern die hinteren Steckabschnitte haben auf ihrer axialen Länge den gleichen bzw. annähernd den gleichen Durchmesser, wodurch sich die Fügekräfte nachweislich um bis zu 50% reduzieren, was sich auf die praktische Anwendung sehr positiv auswirkt. Durch den Wegfall des Konus werden die vorderen Steckabschnitte am freien Ende deutlich weniger verformt. Durch die um bis zu 50% reduzierte Fügekraft müssen die Bauteile nicht mehr per Schlag gefügt werden, sondern erfindungsgemäß reicht ein einfaches Zusammendrücken/-schieben, was die Anwenderfreundlichkeit erhöht.

Ganz besonders bevorzugt weisen die beiden äußeren Bügelarme außenseitig zwischen dem hinteren und vorderen Steckabschnitt jeweils eine radial nach außen vorstehende Stützrippe auf, die beim Einstecken des vorderen Steckabschnitts in eine Spanplattenbohrung als Tiefenanschlag wirkt. Die Stützrippen werden beim Zusammenfahren der beiden Spanplatten in die weiche Stirnseite der einen Spanplatte eingedrückt, so dass die beiden Spannplatten spaltfrei aneinander anliegen.

Vorteilhaft können die vorderen Steckabschnitte außenseitig jeweils mindestens eine radial nach außen vorstehende Nase aufweisen, die weniger weit vorsteht als die Stützrippe. Durch die Nase(n) fällt der in eine Bohrung eingesteckte Verbinder nicht mehr aus der Bohrung heraus und lässt sich daher gut vorstecken.

Vorzugsweise weisen die vorderen Steckabschnitte außenseitig mehrere Querrippen zum Eindrücken in die Bohrungswandung auf. Dabei kann zumindest die vorderste Querrippe weniger weit nach außen vorstehen als die hinterste Querrippe und dadurch eine Einführhilfe beim Einstecken des vorderen Steckabschnitts in eine Bohrung ausbilden.

Vorzugsweise weisen die vorderen Steckabschnitte an ihren freien Enden innenseitig jeweils eine Aussparung auf, damit in der Montagestellung genügend Raum für den mittleren Bügelarm des jeweils anderen Bügels vorhanden ist und dadurch möglichst kein Kraftanstieg bei der Spreizung auftritt.

In einer bevorzugten Ausführung sind die Verriegelungsabschnitte durch Innenrasten, welche innseitig jeweils an den vorderen Steckabschnitten vorgesehen sind, und durch Außenrasten, welche außenseitig jeweils an den hinteren Steckabschnitten und/oder an dem mittleren Bügelarm vorgesehen sind, gebildet. In einer anderen bevorzugten Ausführung sind die Verriegelungsabschnitte durch eine oder mehrere Rastfedern, welche innseitig jeweils an den vorderen Steckabschnitten vorgesehen sind, und durch eine Rasterung, welche an dem mittleren Bügelarm vorgesehen sind, gebildet.

In einer vorteilhaften Ausführungsform der Erfindung weisen die hinteren Steckabschnitte zumindest auf einer Teillänge einen Längsschlitz auf, um eine Federwirkung der dadurch entstehenden zwei Seiten zu ermöglichen und hierdurch eine geringere Fügekraft beim Aufspreizen durch den mittleren Bügelarm zu erreichen.

Die beiden Bügel werden um 90° gegeneinander verdreht mit den vorderen Steckabschnitten des einen Bügels zwischen die vorderen Steckabschnitte des jeweils anderen Bügels über die spätere Montagestellung hinaus bis in eine Vormontagestellung ineinander eingesteckt, in der die vorderen Steckabschnitte des einen Bügels in dessen Einsteckrichtung über den mittleren Bügelarm des jeweils anderen Bügels vorstehen. In dieser Vormontagestellung sind die beiden Bügel zueinander vorfixiert (Transportsicherheit) und werden beim Zusammenschieben der Bauteile aus der Vormontagestellung weiter bis in die Montagestellung zusammengeschoben.

Die Erfindung betrifft schließlich auch eine Anordnung mit zwei aneinander anliegenden Bauteilen und mit einem wie oben ausgebildeten Verbinder in seiner Montagestellung, wobei die vorderen Steckabschnitte der beiden Bügel jeweils in eine Bohrung der Bauteile eingesetzt und darin durch die mittleren Bügelarme der zusammengeschobenen Bauteile jeweils nach außen aufgespreizt sind und die beiden Bügel miteinander verriegelt sind.

Vorzugsweise entspricht die Bohrtiefe mindestens einer der beiden Bohrungen der Länge des vorderen Steckabschnitts des eingesetzten Bügels, so dass der Bohrgrund als Tiefenanschlag wirkt.

Weitere Vorteile der Erfindung ergeben sich aus der Beschreibung, den Ansprüchen und der Zeichnung. Ebenso können die vorstehend genannten und die noch weiter aufgeführten Merkmale je für sich oder zu mehreren in beliebigen Kombinationen Verwendung finden. Die gezeigten und beschriebenen Ausführungsformen sind nicht als abschließende Aufzählung zu verstehen, sondern haben vielmehr beispielhaften Charakter für die Schilderung der Erfindung.

Es zeigen:
- Fign. 1a, 1b: zwei perspektivische Ansichten des erfindungsgemäßen Verbinders mit zwei bis in eine Vormontagestellung ineinander gesteckten, baugleichen U-förmigen Bügeln;
- Fig. 2: eine Seitenansicht eines der in Fig. 1 gezeigten Bügel;
- Fig. 3: den in Fig. 1 gezeigten Verbinder in der Vormontagestellung beim Stoßverbinden zweier Bauteile;
- Fign. 4a, 4b: den aus der Vormontagestellung in eine Zwischenstellung zusammengeschobenen Verbinder beim Stoßverbinden der zwei Bauteile, jeweils in zwei um 90° verdrehten Längsschnitten;
- Fign. 5a, 5b: den aus der Zwischenstellung weiter bis in die Montagestellung zusammengeschobenen Verbinder beim Stoßverbinden der zwei Bauteile, jeweils in zwei um 90° verdrehten Längsschnitten;
- Fig. 6: eine perspektivische Ansicht eines modifizierten erfindungsgemä-ßen Verbinders; und
- Fig. 7: eine Seitenansicht eines U-förmigen Bügels einer zweiten Ausführungsform des erfindungsgemäßen Verbinders.

In der folgenden Figurenbeschreibung werden für gleiche bzw. funktionsgleiche Bauteile identische Bezugszeichen verwendet.

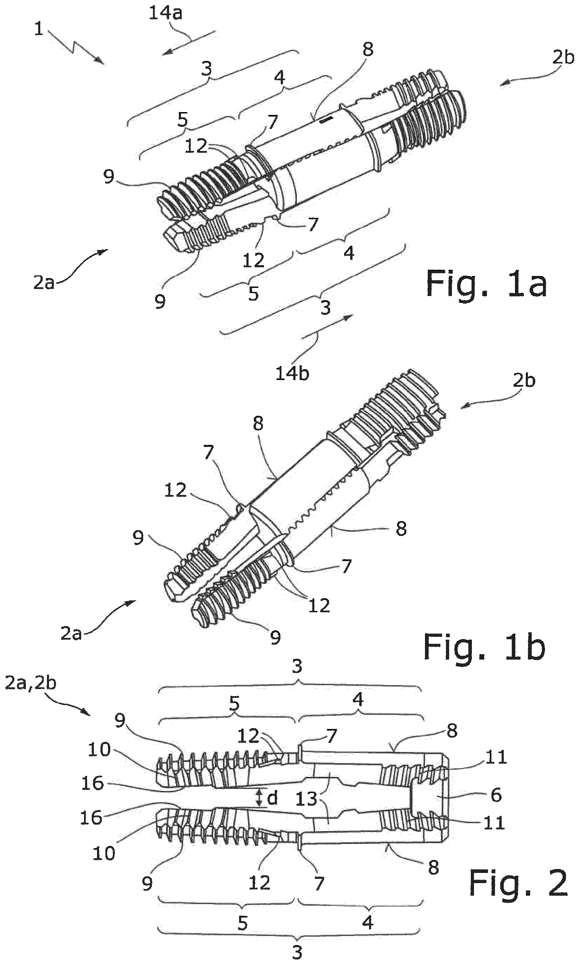

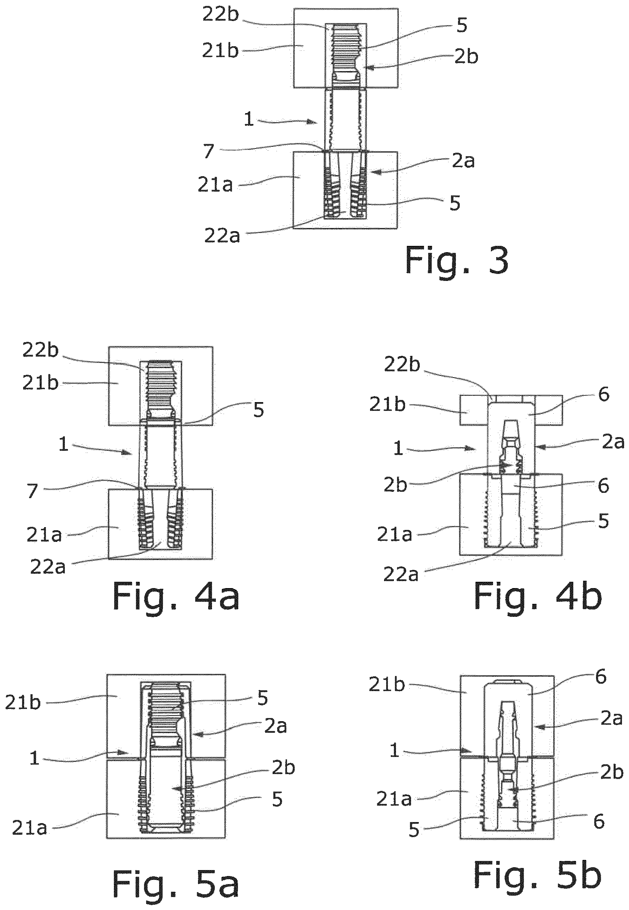

Der in **Fign. 1a und 1b** gezeigte Verbinder **1** dient zum Stoßverbinden zweier Spanplatten **21a, 21b** in einem T-Stoß (Fig. 3), die jeweils eine kreisrunde Bohrung **22a, 22b** aufweisen. Die Spanplatten 21a, 21b weisen bis auf die weichen Stirnseiten eine harte Oberfläche auf, so dass im T-Stoß eine weiche Spanplattenstirnseite auf eine harte Oberfläche stößt.

Der Verbinder 1 umfasst zwei Verbinderteile in Form von U-förmigen Bügeln **2a, 2b,** die im gezeigten Ausführungsbeispiel baugleich ausgebildet sind, aber auch unterschiedlich ausgebildet sein können.

Wie in **Fig. 2** gezeigt, weist der U-förmige Bügel 2a, 2b zwei äußere Bügelarme **3** mit jeweils einem hinteren Steckabschnitt **4** und mit einem das freie Bügelende ausbildenden vorderen Steckabschnitt **5** sowie einen dazwischenliegenden mittleren Bügelarm **6** auf. Die beiden äußeren Bügelarme 3 weisen außenseitig zwischen dem hinteren und vorderen Steckabschnitt 4, 5 jeweils eine radial nach au-ßen vorstehende, ringsegmentförmige Stützrippe **7** auf. Die Außenseiten **8** der hinteren Steckabschnitte 4 sind jeweils als Teilmantelflächen des gleichen Kreiszylinders ausgebildet. Die vorderen Steckabschnitte 5 weisen an ihren einander abgewandten Außenseiten mehrere krallenartige Querrippen **9** und an ihren einander zugewandten Innenseiten mehrere querverlaufende Innenrasten **10** auf. Der Außendurchmesser (Außenabstand) der drei vordersten Querrippen 9 steigt nach hinten auf den größeren Außendurchmesser der hinteren Querrippen 9 an, so dass die vordersten Querrippen 9 als Einfügehilfe dienen. Die hinteren Steckabschnitte 4 weisen an ihren einander zugewandten Innenseiten mehrere querverlaufende Außenrasten **11** auf. Zwischen der Stützrippe 7 und der hintersten Querrippe 9 weisen die vorderen Steckabschnitte 5 außenseitig jeweils zwei Nasen **12** auf gleiche Höhe auf, die weniger weit radial nach außen vorstehen als die Stützrippe 7. Die Dicke des mittleren Bügelarms 6 quer zur Spreizrichtung der beiden äußeren Bügelarme 5 ist größer als der lichte Abstand d der beiden gegeneinander aufspreizbaren vorderen Steckabschnitte 5. Etwa auf Höhe der Stützrippen 7 weisen die hinteren Steckabschnitte 4 innenseitig eine Rastnut **13** auf.

Anders als in Fign. 1 und 2 gezeigt, kann die Außenseite 8 der hinteren Steckabschnitt 4 mit einer optionalen Riffelung versehen sein, um eine zusätzliche Rückhaltekraft in der Bohrung zu erreichen.

Mit den vorderen Steckabschnitten 5 einander zugewandt und um 90° gegeneinander verdreht, werden die beiden Bügel 2a, 2b mit den vorderen Steckabschnitten 5 des einen Bügels 2a, 2b zwischen die vorderen Steckabschnitte 5 des anderen Bügels 2b, 2a in Steckrichtung **14a** bzw. **14b** - über die spätere Montagestellung hinaus - bis in die in Fign. 1a, 1b gezeigte Vormontagestellung ineinander eingesteckt. In dieser Vormontagestellung stehen die vorderen Steckabschnitte 5 des einen Bügels 2a, 2b in dessen Einsteckrichtung 14a, 14b jeweils über den mittleren Bügelarm 6 des jeweils anderen Bügels 2b, 2a vor. In der Vormontagestellung sind die mittleren Bügelarme 6 in den beiden Rastnuten 13 des jeweils anderen Bügels 2a, 2b eingerastet und dadurch zueinander vorfixiert und gegen unbeabsichtigtes Zusammenschieben gesichert.

Wie in **Fig. 3** gezeigt, wird dieser vormontierte Verbinder 1 zuerst mit den beiden vorderen Steckabschnitten 5 des einen Bügels 2a in die Bohrung 22a der einen Spanplatten 21a und dann mit den beiden vorderen Steckabschnitten 5 des anderen Bügels 2b in die Bohrung 22b der anderen Spanplatten 21b jeweils soweit eingesteckt, bis die Bügel 2a, 2b mit ihren Stützrippen 7 an den Spanplatten 21a, 21b anliegen. Hierbei fungieren die drei vordersten Querkrallen 9 als Einführhilfe. Bei der Flächenbohrung kann sich die Stützrippe 7 gut abstützen und bildet einen Tiefenanschlag, da hier die Spanplatte eine harte Oberfläche aufweist. In der weicheren Spanplattenstirnseite jedoch kann diese Abstützung nicht stattfinden, hier muss die Bohrtiefe die Abstützung übernehmen, damit der Verbinder 1 nicht zu weit in die Bohrung gedrückt wird. Die freien Enden der vorderen Steckabschnitte 5 drücken sich hierbei leicht in den Bohrungsgrund ein. Durch die Nasen 12 bleibt der Verbinder 1 in den Spannplatten 21a, 21b stecken, so dass sich der Verbinder 1 gut vorstecken lässt und nicht mehr aus den Bohrungen 22a, 22b herausfällt.

**Fign. 4a, 4b** zeigen den aus der Vormontagestellung in eine Zwischenstellung zusammengeschobenen Verbinder 1, in der die mittleren Bügelarme 6 aus den Rastnuten 13 ausgetreten und in die Bohrungen 22a, 22b eingetreten sind und dabei die vorderen Steckabschnitte 5 des jeweils anderen Bügels aufspreizen. Aufgrund ihrer zylindrischen Außenseiten 8 treten die hinteren Steckabschnitte 4 kraftlos in die Bohrungen 22a, 22b ein.

Die beiden Spannplatten 21a, 21b werden aus der Zwischenstellung weiter bis zur gegenseitigen Anlage in ihre Montagestellung zusammengeschoben **(****Fign. 5a, 5b),** Dabei werden die beiden vorderen Steckabschnitte 5 des einen Bügels 2a, 2b durch den mittleren Bügelarm 6 des jeweils anderen Bügels 2b, 2a immer weiter aufgespreizt, wodurch die Querrippen 9 in die Wandung der Bohrung 21a, 21b eingedrückt werden. In der Montagestellung greifen die Innenrasten 10 des einen Bügels 2a, 2b und die Außenrasten 11 des jeweils anderen Bügels 2b, 2a ineinander, wodurch die beiden Bügel 2a, 2b miteinander verriegelt und somit gegen ein Zurückschieben gesichert sind. Die Stützrippen 7 werden in die weiche Stirnseite der einen Spanplatte eingedrückt, so dass anders, als in Fign. 5a, 5b gezeigt, kein sichtbarer Spalt zwischen den Spanplatten 21a, 21b zurückbleibt und die beiden Spannplatten 21a, 21b somit spaltfrei aneinander anliegen. Die Fertigungstoleranzen der Bohrtiefe werden durch die Innenrasten 10 ausgeglichen, die sich an vier Flanken der Bügel 2a, 2b befinden und jeweils um in Längsrichtung jeweils ein Viertel der Steigung versetzt sind, um kleinstmögliche Stufen zu ermöglichen.

Da die Bohrtiefe als Anschlag fungiert, drücken sich die freien Enden der vorderen Steckabschnitte 5 stirnseitig etwas in den Bohrgrund ein. Dieses Eindrücken behindert die Spreizung der vorderen Steckabschnitte 5 etwas, indem die freien Enden hier wieder etwas nach innen gebogen werden. Damit hier kein Kraftanstieg bei der Spreizung erfolgt, weisen die vorderen Steckabschnitte 5 innenseitig jeweils eine Aussparung **16** (Fig. 2) auf, um genügend Raum für den mittleren Bügelarm 6 des jeweils anderen Bügels zu schaffen.

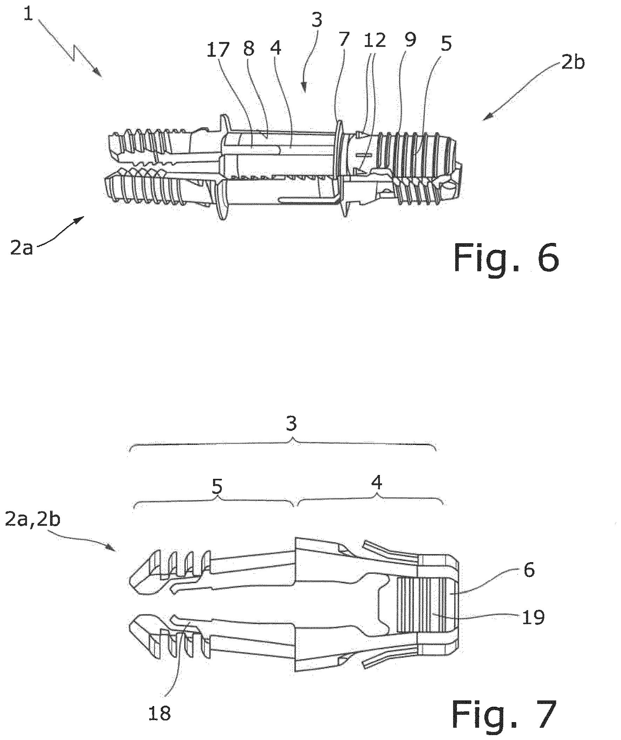

Wie in **Fig. 6** gezeigt, kann der hintere Steckabschnitt 4 auf einer Teillänge (oder auch auf seiner gesamten Länge) einen Längsschlitz **17** aufweisen, um eine Federwirkung der dadurch entstehenden zwei Seiten zu ermöglichen. Hierdurch resultiert eine geringere Fügekraft, da nicht mehr über die Spitzen der Innen- und Außenrasten 10, 11 gespreizt zu werden braucht, d.h., es erfolgt keine Überspreizung. Ohne den Längsschlitz muss immer jeweils über die Spitze der Innen- und Außenrasten 10, 11 gespreizt werden, d.h., die effektive Spreizung ist geringer als die insgesamt beim Fügen benötigte Spreizung.

Vom Bügel der Fig. 2 unterscheidet sich der in **Fig. 7** gezeigte Bügel 2a, 2b lediglich dadurch, dass hier anstelle der Innen- und Außenrasten die vorderen Steckabschnitte 5 innenseitig jeweils eine oder mehrere nach vorne gerichtete Rastfedern **18** und der mittlere Bügelarm 6 eine außenseitige Rasterung **19** aufweisen. In der Montagestellung greifen die Rastfedern 18 - ähnlich dem Kabelbinder-Prinzip - in die Rasterung 19 ein. Damit sinkt ebenfalls die Fügekraft, da nur die effektive Spreizung benötigt wird; die Verrastungen bewirken hier keine Zunahme der Spreizung oder der Kraft. Die Rastfedern 18 oder die Rasterung 19 können auch hier in Längsrichtung gegeneinander versetzte Rastabschnitte aufweisen, um möglichst kleine Stufen abbilden zu können.

## Patentansprüche

1. Verbinder (1) zum Stoßverbinden zweier Bauteile (21a, 21b), insbesondere zweier Spanplatten,
mit zwei um 90° gegeneinander verdreht bis in eine verriegelte Montagestellung ineinander zusammenschiebbaren Verbinderteilen in Form von U-förmigen Bügeln (2a, 2b) mit zwei äußeren Bügelarmen (3), die jeweils einen hinteren Steckabschnitt (4) zum Einsetzen in eine kreisrunde Bohrung (22a, 22b) des einen Bauteils (21a, 21b) und einen das freie Bügelende ausbildenden, aufspreizbaren vorderen Steckabschnitt (5) zum Einsetzen in eine kreisrunde Bohrung (3a, 3b) des anderen Bauteils (21b, 21a) aufweisen,
mit einem mittleren Bügelarm (6) zum Aufspreizen der beiden vorderen Steckabschnitte (5) des jeweils anderen Bügels in der Montagestellung, und
mit mindestens einem Verriegelungsabschnitt (10, 11; 18, 19) zum gegenseitigen Verriegeln der beiden Bügel (2a, 2b) in der Montagestellung, **dadurch gekennzeichnet,**
**dass** die Außenseiten (8) der hinteren Steckabschnitte (4) jeweils als Teilmantelflächen des gleichen Kreiszylinders oder zumindest annähernd als Teilmantelflächen des gleichen Kreiszylinders ausgebildet sind.

2. Verbinder nach Anspruch 1, **dadurch gekennzeichnet, dass** die beiden Bügel (2a, 2b) baugleich sind.

3. Verbinder nach Anspruch 1 oder 2, **dadurch gekennzeichnet, dass** die beiden äußeren Bügelarme (3) außenseitig zwischen dem hinteren und vorderen Steckabschnitt (4, 5) jeweils eine radial nach außen vorstehende Stützrippe (7) aufweisen.

4. Verbinder nach Anspruch 3, **dadurch gekennzeichnet, dass** die vorderen Steckabschnitte (5) außenseitig jeweils mindestens eine radial nach außen vorstehende Nase (12) aufweisen, die weniger weit vorsteht als die Stützrippe (7).

5. Verbinder nach einem der vorhergehenden Ansprüche, **dadurch gekennzeichnet, dass** die vorderen Steckabschnitte (5) außenseitig mehrere Querrippen (9) aufweisen.

6. Verbinder nach Anspruch 5, **dadurch gekennzeichnet, dass** mindestens die vorderste Querrippe (9) weniger weit nach außen vorsteht als die hinterste Querrippe (9).

7. Verbinder nach einem der vorhergehenden Ansprüche, **dadurch gekennzeichnet, dass** die vorderen Steckabschnitte (5) an ihren freien Enden innenseitig jeweils eine Aussparung (16) aufweisen.

8. Verbinder nach einem der vorhergehenden Ansprüche, **dadurch gekennzeichnet, dass** die Verriegelungsabschnitte durch Innenrasten (10), welche innseitig jeweils an den vorderen Steckabschnitten (5) vorgesehen sind, und durch Außenrasten (11), welche außenseitig jeweils an den hinteren Steckabschnitten (4) und/oder an dem mittleren Bügelarm (6) vorgesehen sind, gebildet sind.

9. Verbinder nach einem der Ansprüche 1 bis 7, **dadurch gekennzeichnet, dass** die Verriegelungsabschnitte durch eine oder mehrere Rastfedern (18), welche innenseitig jeweils an den vorderen Steckabschnitten (5) vorgesehen sind, und durch eine Rasterung (19), welche an dem mittleren Bügelarm (6) vorgesehen sind, gebildet sind.

10. Verbinder nach einem der vorhergehenden Ansprüche, **dadurch gekennzeichnet, dass** die hinteren Steckabschnitte (4) zumindest auf einer Teillänge einen Längsschlitz (17) aufweisen.

11. Verbinder nach einem der vorhergehenden Ansprüche, **dadurch gekennzeichnet, dass** die beiden Bügel (2a, 2b) um 90° gegeneinander verdreht mit den vorderen Steckabschnitten (5) des einen Bügels (2a, 2b) zwischen die vorderen Steckabschnitte (5) des jeweils anderen Bügels (2b, 2a) über die spätere Montagestellung hinaus bis in eine Vormontagestellung ineinander eingesteckt sind, in der die vorderen Steckabschnitte (5) des einen Bügels (2a, 2b) in dessen Einsteckrichtung (14a, 14b) über den mittleren Bügelarm (6) des jeweils anderen Bügels (2b, 2a) vorstehen, und dass die beiden Bügel (2a, 2b) aus der Vormontagestellung zurück bis in die Montagestellung schiebbar sind.

12. Anordnung mit zwei aneinander anliegenden Bauteilen (21a, 21b) und mit einem in Montagestellung befindlichen Verbinder (1) nach einem der vorhergehenden Ansprüche, wobei die vorderen Steckabschnitte (5) der beiden Bügel (2a, 2b) jeweils in eine Bohrung (22a, 22b) der Bauteile (21a, 21b) eingesetzt und darin durch die mittleren Bügelarme (6) der zusammengeschobenen Bauteile (21a, 21b) jeweils nach außen aufgespreizt sind und die beiden Bügel (2a, 2b) miteinander verriegelt sind.

13. Anordnung nach Anspruch 12, **dadurch gekennzeichnet, dass** die Bohrtiefe mindestens einer der beiden Bohrungen (22a, 22b) der Länge des vorderen Steckabschnitte (5) des eingesetzten Bügels (2a, 2b) entspricht.

## Claims

1. A connector (1) for butt-joining two components (21a, 21b), in particular two chipboards, comprising
two connector parts which, mutually rotated through 90°, can be pushed together, into one another, into a locked assembly position and are in the form of U-shaped brackets (2a, 2b) having two outer bracket arms (3), which respectively have a rear plug-in portion (4) for insertion into a circular drill hole (22a, 22b) of one component (21a, 21b) and an expandable front plug-in portion (5), forming the free bracket end, for insertion into a circular drill hole (22b, 22a) of the other component (21b, 21a),
a middle bracket arm (6) for expansion of the two front plug-in portions (5) of the respectively other bracket in the assembly position, and
at least one locking portion (10, 11; 18, 19) for the mutual locking of the two brackets (2a, 2b) in the assembly position,
**characterized**
**in that** the outer sides (8) of the rear plug-in portions (4) are each configured as partial cylindrical surfaces of the same circular cylinder or, at least approximately, as partial cylindrical surfaces of the same circular cylinder.

2. The connector as claimed in claim 1, **characterized in that** the two brackets (2a, 2b) are structurally identical.

3. The connector as claimed in claim 1 or 2, **characterized in that** the two outer bracket arms (3) have on the outside, between the rear and the front plug-in portion (4, 5), respectively a radially outwardly protruding supporting rib (7).

4. The connector as claimed in claim 3, **characterized in that** the front plug-in portions (5) have on the outside respectively at least one radially outwardly protruding nose (12), which protrudes less far than the supporting rib (7).

5. The connector as claimed in one of the preceding claims, **characterized in that** the front plug-in portions (5) have on the outside a plurality of transverse ribs (9).

6. The connector as claimed in claim 5, **characterized in that** at least the foremost transverse rib (9) protrudes less far outward than the rearmost transverse rib (9).

7. The connector as claimed in one of the preceding claims, **characterized in that** the front plug-in portions (5) have at their free ends, on the inside, respectively a recess (16).

8. The connector as claimed in one of the preceding claims, **characterized in that** the locking portions are formed by inner catches (10), which on the inside are provided respectively on the front plug-in portions (5), and by outer catches (11), which on the outside are provided respectively on the rear plug-in portions (4) and/or on the middle bracket arm (6).

9. The connector as claimed in one of claims 1 to 7, **characterized in that** the locking portions are formed by one or more latching springs (18), which on the inside are provided respectively on the front plug-in portions (5), and by a latching mechanism (19), which are provided on the middle bracket arm (6).

10. The connector as claimed in one of the preceding claims, **characterized in that** the rear plug-in portions (4), at least on a partial length, have a longitudinal slot (17).

11. The connector as claimed in one of the preceding claims, **characterized in that** the two brackets (2a, 2b) are plugged one into the other, mutually rotated through 90°, with the front plug-in portions (5) of one bracket (2a, 2b) between the front plug-in portions (5) of the respectively other bracket (2b, 2a), beyond the subsequent assembly position into a preassembly position, in which the front plug-in portions (5) of one bracket (2a, 2b) protrude in its plug-in direction (14a, 14b) over the middle bracket arm (6) of the respectively other bracket (2b, 2a), and **in that** the two brackets (2a, 2b) are slidable out of the preassembly position back into the assembly position.

12. An arrangement comprising two mutually abutting components (21a, 21b) and a connector (1), located in the assembly position, as claimed in one of the preceding claims, wherein the front plug-in portions (5) of the two brackets (2a, 2b) are inserted respectively in a drill hole (22a, 22b) of the components (21a, 21b) and are therein expanded respectively outward by the middle bracket arms (6) of the pushed-together components (21a, 21b) and the two brackets (2a, 2b) are locked together.

13. The arrangement as claimed in claim 12, **characterized in that** the drilling depth of at least one of the two drill holes (22a, 22b) corresponds to the length of the front plug-in portions (5) of the inserted bracket (2a, 2b).

## Revendications

1. Elément d'assemblage (1) dévolu à la liaison, par aboutement, de deux pièces structurelles (21a, 21b), notamment de deux panneaux de particules, comprenant deux parties de liaison décalées l'une de l'autre de 90°, pouvant s'interpénétrer par coulissement conjoint jusqu'à une position verrouillée de montage, et revêtant la forme d'étriers (2a, 2b) configurés en U, comportant deux bras extérieurs (3) qui présentent, à chaque fois, un tronçon postérieur d'enfichage (4) conçu pour être inséré dans un alésage circulaire (22a, 22b) de l'une (21a, 21b) des pièces structurelles, et un tronçon antérieur d'enfichage (5) déployable, formant l'extrémité libre des étriers et destiné à l'insertion dans un alésage circulaire (22b, 22a) de l'autre pièce structurelle (21b, 21a),
un bras central (6) d'étrier, affecté au déploiement des deux tronçons antérieurs d'enfichage (5) de l'autre étrier considéré, dans la position de montage, et
au moins un tronçon de verrouillage (10, 11 ; 18, 19) affecté au verrouillage mutuel des deux étriers (2a, 2b) dans ladite position de montage,
**caractérisé par le fait**
**que** les faces extérieures (8) des tronçons postérieurs d'enfichage (4) sont réalisées, à chaque fois, en tant que surfaces partielles de l'enveloppe du même cylindre circulaire, ou au moins approximativement en tant que surfaces partielles de l'enveloppe du même cylindre circulaire.

2. Elément d'assemblage selon la revendication 1, **caractérisé par le fait que** les deux étriers (2a, 2b) présentent des agencements structurels identiques.

3. Elément d'assemblage selon la revendication 1 ou 2, **caractérisé par le fait que** les deux bras extérieurs (3) des étriers sont extérieurement dotés, entre les tronçons d'enfichage (4, 5) postérieur et antérieur, d'une nervure respective d'appui (7) faisant saillie vers l'extérieur dans le sens radial.

4. Elément d'assemblage selon la revendication 3, **caractérisé par le fait que** les tronçons antérieurs d'enfichage (5) sont extérieurement pourvus, à chaque fois, d'au moins un ergot (12) qui fait saillie vers l'extérieur, dans le sens radial, et dont la saillie est moindre que celle de la nervure d'appui (7).

5. Elément d'assemblage selon l'une des revendications précédentes, **caractérisé par le fait que** les tronçons antérieurs d'enfichage (5) sont extérieurement munis de plusieurs nervures transversales (9).

6. Elément d'assemblage selon la revendication 5, **caractérisé par le fait qu'**au moins la nervure transversale (9) la plus avancée présente une moindre saillie, vers l'extérieur, que la nervure transversale (9) la plus reculée.

7. Elément d'assemblage selon l'une des revendications précédentes, **caractérisé par le fait que** les tronçons antérieurs d'enfichage (5) sont intérieurement dotés, à chaque fois, d'un évidement (16) au niveau de leurs extrémités libres.

8. Elément d'assemblage selon l'une des revendications précédentes, **caractérisé par le fait que** les tronçons de verrouillage sont formés par des crans internes (10) prévus à chaque fois, intérieurement, sur les tronçons antérieurs d'enfichage (5) et par des crans externes (11) prévus à chaque fois, extérieurement, sur les tronçons postérieurs d'enfichage (4) et/ou sur le bras central (6) d'étrier.

9. Elément d'assemblage selon l'une des revendications 1 à 7, **caractérisé par le fait que** les tronçons de verrouillage sont constitués d'une ou de plusieurs languette(s) encliquetable(s) (18), intérieurement prévue(s) à chaque fois sur les tronçons antérieurs d'enfichage (5), et d'une structure de crantage (19) prévue sur le bras central (6) d'étrier.

10. Elément d'assemblage selon l'une des revendications précédentes, **caractérisé par le fait que** les tronçons postérieurs d'enfichage (4) sont munis d'une fente longitudinale (17), au moins sur une partie de la longueur.

11. Elément d'assemblage selon l'une des revendications précédentes, **caractérisé par le fait que** les deux étriers (2a, 2b), mutuellement décalés de 90°, sont emboîtés l'un dans l'autre par les tronçons antérieurs d'enfichage (5) de l'un (2a, 2b) des étriers, entre les tronçons antérieurs d'enfichage (5) de l'autre étrier (2b, 2a) considéré, avec outrepassement de la position ultérieure de montage, jusque dans une position de montage préalable dans laquelle lesdits tronçons antérieurs d'enfichage (5) de l'un (2a, 2b) desdits étriers font saillie, dans la direction d'emboîtement (14a, 14b) de ce dernier, au-delà du bras central (6) dudit autre étrier (2b, 2a) considéré ; et **par le fait que** lesdits deux étriers (2a, 2b) peuvent effectuer un coulissement rétrograde jusque dans la position de montage à partir de ladite position de montage préalable.

12. Ensemble comprenant deux parties structurelles (21a, 21b) en applique l'une contre l'autre et un élément d'assemblage (1) conforme à l'une des revendications précédentes, agencé en position de montage, sachant que les tronçons antérieurs d'enfichage (5) des deux étriers (2a, 2b) sont insérés, à chaque fois, dans un alésage (22a, 22b) des pièces structurelles (21a, 21b) dans lequel ils sont respectivement déployés, vers l'extérieur, par les bras centraux (6) des étriers desdites pièces structurelles (21a, 21b) animées d'un coulissement conjoint, et que lesdits deux étriers (2a, 2b) sont verrouillés l'un à l'autre.

13. Ensemble selon la revendication 12, **caractérisé par le fait que** la profondeur d'au moins l'un des deux alésages (22a, 22b) correspond à la longueur du tronçon antérieur d'enfichage (5) de l'étrier (2a, 2b) inséré.
